# EUROPÄISCHE PATENTSCHRIFT

(11) **EP 3 754 605 B1**
(45) Veröffentlichungstag und Bekanntmachung des Hinweises auf die Patenterteilung: **06.08.2025**
(21) Anmeldenummer: 20181312.8
(22) Anmeldetag: 22.06.2020
(51) Int. Cl.: G06T 7/00, G01N 21/21, G01N 25/72, G01N 21/84, G01N 21/88

(54) **VERFAHREN UND VORRICHTUNG ZUM ERMITTELN VON FEHLSTELLEN AN EINEM FASERMATERIAL SOWIE FASERLEGEANLAGE HIERZU**
METHOD AND DEVICE FOR DETECTING DEFECTS IN A FIBRE MATERIAL AND FIBRE LAYING INSTALLATION FOR SAME
PROCÉDÉ ET DISPOSITIF DE DÉTERMINATION DE POINTS DE DÉFAILLANCE DES MATIÈRES FIBREUSES AINSI QU'INSTALLATION DE POSE DE FIBRES ASSOCIÉE

(30) Priorität: 20.06.2019 DE 102019116750
(43) Veröffentlichungstag der Anmeldung: 23.12.2020
(73) Patentinhaber: Deutsches Zentrum für Luft- und Raumfahrt e.V., 53227 Bonn-Oberkassel (DE)
(72) Erfinder: Meister, Sebastian, 21680 Stade (DE)
(74) Vertreter: Gramm, Lins & Partner Patent- und Rechtsanwälte PartGmbB

(56) Entgegenhaltungen:
- EP-A1- 3 396 484
- EP-A1- 3 432 266
- DE-A1- 102012 220 923

## Beschreibung

Die Erfindung betrifft ein Verfahren und eine Vorrichtung zum Ermitteln von Fehlstellen von auf einem Werkzeug abgelegten Fasermaterial eines Faserverbundwerkstoffes, der das Fasermaterial und ein das Fasermaterial einbettendes Matrixmaterial enthält. Die Erfindung betrifft ebenso eine Faserlegeanlage zum Ablegen von Fasermaterial eines Faserverbundwerkstoffes auf ein Werkzeug zur Herstellung eines Faserverbundbauteils hierzu.

Aufgrund der gewichtsspezifischen Festigkeit und Steifigkeit von Faserverbundbauteilen, die aus einem Faserverbundwerkstoff hergestellt werden, sind derartige Bauteile aus der Luft- und Raumfahrt sowie aus vielen weiteren Anwendungsgebieten, wie beispielsweise dem Automobilbereich, heutzutage kaum mehr wegzudenken. Bei der Herstellung eines Faserverbundbauteils wird dabei ein das Fasermaterial einbettendes Matrixmaterial meist unter Temperatur- und Druckbeaufschlagung ausgehärtet und bildet so nach dem Aushärten eine integrale Einheit mit dem Fasermaterial. Die Verstärkungsfasern des Fasermaterials werden hierdurch in ihre vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen. Werden für die Herstellung trockene Fasermaterialien bereitgestellt, so wird während des Herstellungsprozesses das Matrixmaterial des Faserverbundwerkstoffes in das Fasermaterial durch einen Infusionsprozess infundiert, durch den das trockene Fasermaterial mit dem Matrixmaterial imprägniert wird. Dies geschieht in der Regel aufgrund einer Druckdifferenz zwischen dem Matrixmaterial und dem Fasermaterial, indem beispielsweise das Fasermaterial mittels einer Vakuumpumpe evakuiert wird. Im Gegensatz hierzu sind auch Faserverbundwerkstoffe bekannt, bei denen das Fasermaterial mit dem Matrixmaterial bereits vorimprägniert ist (sogenannte Prepregs).

Vor dem Aushärten des Matrixmaterials wird in der Regel das Fasermaterial in ein Formwerkzeug eingebracht, das mit seiner formgebenden Werkzeugoberfläche die spätere Bauteilform nachbildet. Dabei können sowohl trockene als auch vorimprägnierte Fasermaterialien in das Formwerkzeug abgelegt bzw. eingebracht werden. Zur Herstellung von großskaligen Strukturbauteilen, wie beispielsweise Flügelschalen von Verkehrsflugzeugen oder Rotorblätter von Windkraftanlagen, werden zur Optimierung des Ablegeverfahrens automatisierte Faserablegeprozesse verwendet, bei denen mithilfe einer Fertigungsanlage und mindestens einem Faserlegekopf ein dem Faserlegekopf zugeführtes quasiendloses Fasermaterial auf dem Werkzeug abgelegt wird. Bei der sogenannten Fiber Placement Technologie werden beispielsweise vorimprägnierte Fasermaterialien bahnweise auf dem Formwerkzeug mithilfe eines derartigen Faserlegekopfes abgelegt. Der Faserlegekopf ist dabei an einem Roboter angeordnet und kann gegenüber dem Formwerkzeug relativ verfahren bzw. bewegt werden. Hierdurch können die einzelnen Faserbahnen auf der Werkzeugoberfläche zuerst bahnweise und dann lagenweise abgelegt werden. Bei der Fiber Placement Technologie werden dabei gleichzeitig mehrere, meist 8, 16 oder 32 schmale Materialstreifen, sogenannte Tows, auf dem Werkzeug abgelegt. Im Gegensatz hierzu werden bei der Fiber Tape Laying Technologie meist breite Faserbahnen, auch Tapes genannt (in der Regel 150 mm, 300 mm oder 600 mm breit mit einer Dicke von wenigen Zehntel Millimeter), mithilfe des Faserlegekopfes auf dem Formwerkzeug abgelegt.

Eine solche automatisierte Faserlegeanlage ist beispielsweise aus der DE 10 2010 015 027 B4 bekannt, bei der auf einem umlaufenden Schienensystem mehrere Roboter geführt werden, die jeweils einen Ablegekopf als Endeffektor haben. Mittels einer Faserzuführung werden den Ablegeköpfen kontinuierlich Fasermaterial aus einem Fasermagazin zugeführt, während die einzelnen Roboter mit ihren Ablege-köpfen das ihnen zugeführte Fasermaterial auf einem in der Mitte des umlaufenden Schienensystems vorgesehenen Formwerkzeug ablegen. Mithilfe der Faserlegeköpfe werden somit in dem Formwerkzeug sogenannte Faserlaminate, auch Faserpreformen genannt, hergestellt, bei denen der Prozess des Infundierens des Matrixmaterials bzw. des Aushärtens des Matrixmaterials noch nicht stattgefunden hat. Derartige Faserlaminate bilden somit das Bauteil in einem Rohzustand vor dem Aushärten des Matrixmaterials ab.

Faserlaminate bzw. Faserpreformen für großskalige Strukturbauteile, wie beispielsweise Flügel oder Rotorblätter, bestehen nicht selten aus vielen Einzellagen, die je nach Anwendungsgebiet des Bauteils auch mehr als 100 Lagen umfassen können. Zur Gewährleistung einer hohen Bauteilqualität muss die Anzahl auftretender Prozessfehler bei der Ablage des Fasermaterials minimiert bzw. gänzlich verhindert werden. Das Auftreten von Prozessfehlern bzw. Fertigungsabweichungen mit großem negativen Einfluss auf die Festigkeit der Bauteilstruktur muss nach Möglichkeit vollständig im Prozess erkannt und wünschenswerter Weise auch unterbunden werden.

In der Praxis hat sich hierfür oftmals die manuelle Inspektion der Faserlaminate bzw. der Einzellagen etabliert. Je nach Bauteilgröße, Mitarbeiterverfügbarkeit und Fehlerhäufigkeit innerhalb einer Einzellage werden im Mittel etwa 15 bis 30 Minuten benötigt, die Ablage einer einzigen Faserlage zu untersuchen. Da jedoch die Ablage einer einzelnen Faserlage in der Regel deutlich schneller mithilfe automatisierter Faserlegeanlagen durchgeführt werden kann, wird durch die manuelle Inspektion die Anlageneffizienz deutlich herabgesetzt. So werden bei der Herstellung von Flügelschalen für Kurzstreckenflugzeuge bis zu 400 Einzellagen benötigt, woraus sich aufgrund der manuellen Inspektion ein Anlagenstillstand von 6000 bis 12.000 Minuten pro Bauteil ergibt.

Ebenso ist die Inspektion durch einen geschulten Mitarbeiter stark vom Erfahrungsgrad abhängig und darüber hinaus nicht in dem Maße qualitativ ausreichend, wie es die Fertigungstoleranzen eigentlich erfordern. Als Beispiel ist ein zulässiger Abstand zwischen 2 Materialbahnen von 1 mm genannt, der qualitativ nur unter Verwendung von Hilfsmitteln und dies auch nur stichpunktartig untersucht werden kann.

Aus diesen Gründen ist eine automatisierte Untersuchung abgelegter Faserlagen zur Erkennung von Ablegefehlern wünschenswert, um sowohl qualitativ als auch quantitativ das Erkennen von Oberflächenfehlern abgelegter Fasermaterialien zu verbessern.

So ist aus der DE 10 2013 104 546 A1 ein Verfahren zum Erkennen von Fehlstellen von auf einer Werkzeugoberfläche abgelegten Faserhalbzeugen bekannt, wobei mithilfe eines Lichtprojektionsverfahrens, bei dem die Oberfläche mit Licht einer Lichtquelle aus einer ersten Richtung beleuchtet und das von der Oberfläche reflektierte Licht aus einer anderen, zweiten Richtung mit einer Kamera aufgenommen wird, ein Höhenprofil der Fasermaterialoberfläche in Abhängigkeit von den aufgenommenen Bilddaten der Kamera erzeugt wird. Anhand dieses Höhenprofils können nun Fehlstellen durch eine Bildauswertung in der Fasermaterialoberfläche erkannt werden.

Aus der DE 10 2013 112 260 A1 ist ebenfalls ein Verfahren zum Erkennen von Fehlstellen mithilfe eines Lichtprojektionsverfahrens bekannt, wobei hierbei die Fasermaterialoberfläche zusätzlich zu dem Licht der Lichtquelle des Lichtprojektionsverfahrens mittels einer Beleuchtungseinheit beleuchtet wird und anschließend zusätzlich zu dem Höhenprofil die Fehlstellen auch in Abhängigkeit einer Intensitätsverteilung des reflektierten Lichtes der Beleuchtungseinheit ermittelt werden.

Weiterhin ist aus der DE 10 2013 104 545 A1 ein Verfahren zum Erkennen von Fehlstellen mithilfe eines Lichtprojektionsverfahrens bekannt, wobei hierbei zusätzlich zu der Ermittlung des Höhenprofils die Werkzeugoberfläche oder die abgelegten Fasermaterialien temperiert und anschließend mit einer Thermokamera aufgenommen werden. Basierend auf den Thermographiebildern der Thermographiekamera sowie dem zugrunde liegenden Höhenprofil aus dem Lichtprojektionsverfahren können nun Fehlstellen auf der Fasermaterialoberfläche erkannt werden.

Des Weiteren ist aus der nachveröffentlichten DE 10 2018 124 079.1 ein Verfahren und eine Vorrichtung zum Ermitteln von Fehlstellen von Fasermaterialien bekannt, bei dem die Fasermaterialoberfläche von vorimprägnierten Fasermaterialien durch mindestens einen Bildsensor einer bildgebenden Aufnahmenvorrichtung in einem Wellenlängenspektrum außerhalb des sichtbaren Spektrums aufgenommen wird. In Abhängigkeit von auf dieser Basis generierten digitalen Bilddaten werden nun Fehlstellen an dem abgelegten, vorimprägnierten Fasermaterialien erkannt.

Aus der nachveröffentlichten DE 10 2019 112 312.7 ist ein Verfahren zum dreidimensionalen Erfassen einer Fasermaterialoberfläche eines Fasermaterials eines Faserverbundwerkstoffes bekannt, bei dem die Fasermaterialoberfläche mit mindestens zwei polarisationssensitiven Aufnahmesensoriken aufgenommen und aus den resultierenden Messdaten dann dreidimensionale Oberflächendaten der Fasermaterialoberfläche erstellt werden. Hieraus ergibt sich dann beispielsweise ein digitales, dreidimensionales Oberflächenmodell der zu erfassenden Fasermaterialoberfläche.

Aus der nachveröffentlichten DE 10 2019 112 317.8 ist ein Verfahren zum Erkennen von geometrischen Oberflächenfehlern einer Fasermaterialoberfläche bekannt, bei dem die Fasermaterialoberfläche mit verschiedenen elektromagnetischen Strahlungen unterschiedlicher Polarisation bestrahlt wird. Mithilfe einer Auswerteeinheit können dann aus den polarisationsabhängigen Messdaten, die von der Fasermaterialoberfläche aufgenommen wurden, geometrische Oberflächenfehler erkannt werden. Durch die Variation der Polarisation der emittierten Strahlung und den verschiedenen Winkeln der Bestrahlung können die reflektierten Strahlungen bzw. Reflexionen von der Materialoberfläche eindeutig einer Strahlungsquelle zugeordnet werden, wodurch es möglich wird, geometrische Inhomogenitäten auf der Materialoberfläche prozesssicher erkennen zu können und darüber hinaus gegebenenfalls den Fehler auch zu charakterisieren.

Aus der EP 3 432 266 A1 ist ein Verfahren und eine Vorrichtung zum Erkennen von Fehlstellen bekannt, wobei ein Höhenprofil mittels eines Laserlichtschnittsensors ermittelt und dann basierend auf dem Höhenprofil Fehlstellen innerhalb des Fasermaterials erkannt werden. Hierfür wird zunächst eine Vorab-Analyse durchgeführt, bei der einzelne Teilbereiche statistisch ausgewertet werden. Potentielle Fehlerbereiche werden dann durch eine detaillierte Mustererkennungsanalyse untersucht.

Aus der EP 3 396 484 A1 ist ein Verfahren zur Herstellung eines Faserverbundbauteils bekannt, bei dem automatisiert Fasermaterial auf ein Werkzeug abgelegt wird. Mithilfe eines optischen Kontrollsystems kann manuell der Ablegeprozess überwacht werden.

DE 10 2012 220 923 A1 offenbart die Inspektion von Faserrichtungen in Kohlefaserwerkstoffen mittels Polarisationsaufnahmen.

Vor diesem Hintergrund ist es Aufgabe der vorliegenden Erfindung ein verbessertes Verfahren sowie Vorrichtung zum Ermitteln von Fehlstellen an Fasermaterial eines Faserverbundwerkstoffes anzugeben, dass prozesssicher jedwede Form von Fehlstellen sicher erkennen kann.

Die Aufgabe wird mit dem Verfahren zum Ermitteln von Fehlstellen gemäß Anspruch 1, mit der Erkennungsvorrichtung gemäß Anspruch 11 sowie der Faserlegeanlage gemäß Anspruch 12 erfindungsgemäß gelöst. Vorteilhafte Ausgestaltungen der Erfindung finden sich in den entsprechenden Unteransprüchen.

Gemäß Anspruch 1 wird ein Verfahren zum Ermitteln von Fehlstellen von auf einem Werkzeug abgelegtem Fasermaterial eines Faserverbundwerkstoffes vorgeschlagen, wobei der Faserverbundwerkstoff zumindest ein Fasermaterial und ein das Fasermaterial einbettendes Matrixmaterial enthält. Darüber hinaus kann der Faserverbundwerkstoff noch weitere zusätzliche Materialien oder Werkstoffe enthalten, die bedarfsweise dem Faserverbundwerkstoff hinzugefügt werden oder sind. Mittels einer Erkennungsvorrichtung sollen nun Fehlstellen an dem Fasermaterial, welches auf dem Werkzeug abgelegt wurde, ermittelt bzw. festgestellt werden. Hierfür ist erfindungsgemäß vorgesehen, dass durch eine kombinierte Nutzung von drei verschiedenen Sensorarten, nämlich einem Laserlichtschnittsensor, einer Thermografiekamera sowie einer Polarisationskamera, die Fasermaterialoberfläche des Fasermaterials erfasst und dann basierend auf den Messdaten aller drei Sensoren prozesssicher die Fehlstellen erkannt werden.

Erfindungsgemäß werden demnach zunächst erste Bilddaten der Fasermaterialoberfläche des abgelegten Fasermaterials mittels mindestens eines optischen Lichtschnittsensors aufgenommen, bei dem die Fasermaterialoberfläche mit Licht einer Lichtquelle aus einer ersten Richtung beleuchtet und das von der Fasermaterialoberfläche reflektierte Licht aus einer anderen, zweiten Richtung mit einer Kamera aufgenommen wird. Bei der Lichtquelle kann es sich bevorzugter Weise um eine Laserlichtquelle handeln, die eine Laserlichtlinie auf die Fasermaterialoberfläche projiziert, wobei der Projektionswinkel gegenüber der Fasermaterialoberfläche von 90° verschieden ist. Diese so projektierte Laserlichtlinie wird nun durch eine Kamera aufgenommen, wobei aufgrund des von 90° verschiedenen Projektionswinkels (in Bezug auf die Fasermaterialoberfläche) Höhenunterschiede auf der Fasermaterialoberfläche sichtbar werden. Denn die auf die Fasermaterialoberfläche projizierte gerade Laserlichtlinie wird aufgrund von Höhen unterschieden in Abhängigkeit des gewählten Projektionswinkels deformiert. Dies kann durch die gewählte Kamera detektiert und in den ersten Bilddaten aufgezeichnet werden. Hierdurch können kleinste Höhenunterschiede auf der Fasermaterialoberfläche erkannt werden.

Erfindungsgemäß werden des Weiteren zweite Bilddaten der Fasermaterialoberfläche des abgelegten Fasermaterials mittels mindestens einer Thermografiekamera (auch Wärmebildkamera genannt) aufgenommen, wobei die Thermografiekamera elektromagnetische Strahlung im Infrarotspektrum aufnimmt. Hierdurch kann das Rückstrahlverhalten der Fasermaterialoberfläche im Infrarotbereich des elektromagnetischen Spektrums aufgenommen werden.

Erfindungsgemäß werden schließlich dritte Bilddaten der Fasermaterialoberfläche des abgelegten Fasermaterials mittels mindestens einer Polarisationskamera aufgenommen, wodurch nur reflektierte elektromagnetische Strahlung (vorzugsweise im Bereich des sichtbaren Lichtes) mit einer bestimmten Polarisation aufgenommen wird. Dabei kann vorgesehen sein, dass die Polarisationskamera verschiedene Aufnahmekanäle hat, wobei jedem Aufnahmekanal eine bestimmte Polarisation zugeordnet ist (beispielsweise 0°, 45° und 135°). Hierdurch kann gezielt das polarisationsabhängige Rückstrahlverhalten der Fasermaterialoberfläche insbesondere im Bereich des sichtbaren Lichtes (beispielsweise weißes Licht) aufgenommen werden.

Grundsätzlich ist durch die Erfindung nicht ausgeschlossen, dass noch weitere Sensorarten verwendet werden, wie beispielsweise normale Kameras, die lediglich die Fasermaterialoberfläche aufnehmen.

Die so aufgenommenen ersten, zweiten und dritten Bilddaten werden nun mittels einer Kalibriereinheit auf ein gemeinsames Bezugssystem kalibriert, sodass die Bildpunkte in den ersten, zweiten und dritten Bilddaten den jeweiligen Messpunkten auf der Fasermaterialoberfläche entsprechen. Dies bedeutet, dass ein und dieselbe Referenz (Bildpunktkoordinaten) in den ersten, zweiten und dritten Bilddaten auf ein und denselben Messpunkt referenzieren. So ist jeder Bildpunkt in den Bilddaten einander zuordenbar, sodass jeder Bildpunkt zu jedem anderen Bildpunkt in Bezug gesetzt werden kann. Für die weitere Analyse kann somit eine fusionierte Datenbasis bestehend aus den ersten, zweiten und dritten Bilddaten genutzt werden, was deutlich die Limitationen der Einzelsensoren minimiert.

Mittels einer Bildauswertung der ersten Bilddaten, der zweiten Bilddaten und der dritten Bilddaten durch eine Bildauswerteeinheit werden nun Fehlstellen des abgelegten Fasermaterials erkannt und gegebenenfalls klassifiziert.

Der Erfinder hat hierbei erkannt, dass durch die Kombination der 3 Sensorarten Lichtschnittsensor, Thermografiekamera und Polarisationskamera die bei der Faserablage auftretenden Fehlstellen an dem Fasermaterial deutlich prozesssicherer und darüber hinaus auch klassifizierbar erkannt werden können, als dies mit den Einzelsensoren möglich ist. Vielmehr wurde überraschend festgestellt, dass gerade die Kombination von Lichtschnittsensor, Thermografiekamera und Polarisationskamera eine hervorragende Erkennungsrate bietet, die darüber hinaus auch noch schnell und effizient durchführbar ist. Dies ist besonders wichtig bei großskaligen Bauteilen.

Gemäß einer Ausführungsform ist vorgesehen, dass aus den ersten Bilddaten ein Höhenprofil der Fasermaterialoberfläche erzeugt wird, welches dann der Ermittlung von Fehlstellen als erste Bilddaten zugrunde gelegt wird. Hierbei wird die Deformation der an sich geraden Projektion der Laserlichtlinie unter Kenntnis des Projektionswinkels und gegebenenfalls Aufnahmewinkels aufgrund von Höhenunterschieden der Fasermaterialoberfläche in ein Höhenprofil entlang der projektierten Laserlichtlinie umgerechnet.

Gemäß einer weiteren Ausführungsform ist vorgesehen, dass mittels der Bildauswerteeinheit potentielle Fehlerbereiche in den Bilddaten in Abhängigkeit von einer statistischen Bildauswertung der ersten, zweiten und/oder dritten Bilddaten ermittelt werden, wobei bei den potentiellen Fehlerbereichen mit einer gewissen Wahrscheinlichkeit anzunehmen ist, dass sie jeweils wenigstens eine Fehlstelle enthalten. Hierbei kann beispielsweise das sogenannte "Adaptive Thresholding" verwendet werden, welches über die Analyse eines Histogramms entsprechend auffällige Bildbereiche kennzeichnet. Alle nicht markierten Bereiche werden dann von der weiteren Betrachtung ausgeschlossen. Hieraus ergibt sich eine starke Reduktion der zu analysierenden Datenmenge. Demzufolge werden für die Ermittlung der Fehlstellen in Abhängigkeit der ersten, zweiten und dritten Bilddaten lediglich die Bereiche in den Bilddaten herangezogen, die den potentiellen Fehlerbereichen, die zuvor ermittelt wurden, entsprechen.

Gemäß einer Ausführungsform hierzu ist vorgesehen, dass für die Ermittlung von potentiellen Fehlerbereichen ausschließlich die ersten Bilddaten des Laserlichtschnittsensors herangezogen werden.

Gemäß einer Ausführungsform ist vorgesehen, dass für die ersten Bilddaten, die zweiten Bilddaten und die dritten Bilddaten jeweils eine Mehrzahl von Bildmerkmalen einer oder mehrerer Bildmerkmalsarten mittels der Bildauswerteeinheit ermittelt werden, wobei in Abhängigkeit von den ermittelten Bildmerkmalen der ersten Bilddaten, der ermittelten Bildmerkmale der zweiten Bilddaten und der ermittelten Bildmerkmale der dritten Bilddaten dann Fehlstellen des abgelegten Fasermaterials ermittelt werden.

Bei den Bildmerkmalen kann es sich um Elemente handeln, die zur Beschreibung von bestimmten Darstellungsformen dienen, wie beispielsweise verschiedene Formen von Histogrammen. Derartige Bildmerkmale dienen häufig dazu, bestimmte Muster und Strukturen innerhalb der Bilder zu erkennen und gegebenenfalls auch zu unterscheiden.

Gemäß einer Ausführungsform können für die Ermittlung der Bildmerkmale ein oder mehrere der folgenden Bildmerkmalsarten verwendet werden:
- Histogram of Oriented Gradients (HOG),
- Rotation invariant Histogram of Oriented Gradients (RiHOG),
- ein oder mehrere statistische Momente,
- Local Binary Patterns (LBP).

Es hat sich gezeigt, dass insbesondere bei einer Kombination dieser oben genannten Bildmerkmalsarten Fehlstellen auf der Fasermaterialoberfläche bzw. an dem Fasermaterial prozesssicher erkannt und gegebenenfalls klassifiziert werden können.

Gemäß einer Ausführungsform ist vorgesehen, dass ein trainiertes maschinelles Lernsystem bereitgestellt wird, dass mittels mindestens eines maschinell angelernten Entscheidungsalgorithmus eine Korrelation zwischen einer Vielzahl von Bildmerkmalen als Eingabedaten und Fehlstellen an dem Fasermaterial als Ausgabedaten enthält, wobei mindestens eine Fehlstelle an dem Fasermaterial mittels des bereitgestellten maschinellen Lernsystems mittelt wird, indem basierend auf dem angelernten Entscheidungsalgorithmus aus den ermittelten Bildmerkmalen als Eingabedaten des maschinellen Lernsystems mindestens eine Fehlstelle an dem Fasermaterial als Ausgabedaten des maschinellen Lernsystems generiert wird.

Es wurde überraschend festgestellt, dass ein maschinell angelernter Entscheidungsalgorithmus eines maschinellen Lernsystems so trainiert werden kann, dass mittels der Bildmerkmale, die aus den drei Bilddaten der verschiedenen Sensorsysteme ermittelt wurde, als Eingabedaten entsprechende Fehlstellen als Ausgabedaten generiert werden können. Es wurde überraschenderweise auch festgestellt, dass hierdurch nicht nur Fehlstellen erkannt werden können, sondern auch Fehlstellen entsprechend klassifiziert werden können, um so die Art des Fehlers bzw. der Fehlstelle allein aus den Bildmerkmalen feststellen zu können.

Gemäß einer Ausführungsform ist vorgesehen, dass als maschinell angelernter Entscheidungsalgorithmus des maschinellen Lernsystems eine Support Vector Machine (SVM) verwendet werden kann, der basierend auf den Eingabedaten so trainiert ist, dass er eine Klassifikation der Eingabedaten vornimmt und so die entsprechende Fehlstelle erkennt und gleichzeitig klassifiziert. Der Vorteil hierbei ist, dass dieser einfach analysiert werden kann, wodurch eine Zertifizierung für z.B. die Produktion in der Luftfahrtindustrie deutlich einfacher realisierbar ist als bei anderen maschinellen Lernverfahren.

Denkbar ist selbstverständlich aber auch, dass als maschinell angelernter Entscheidungsalgorithmus des maschinellen Lernsystems ein künstliches neuronales Netz verwendet wird, welches eine entsprechende trainierte Zuordnung der Bildmerkmale zu Fehlstellen enthält.

Gemäß einer Ausführungsform ist vorgesehen, dass bei der Ermittlung einer oder mehrerer potentieller Fehlerbereiche, wie dies beispielsweise bereits oben beschrieben ist, für jeden ermittelten potentiellen Fehlerbereich die entsprechenden Bildmerkmale der Bildmerkmalsarten ermittelt und dann als Eingabedaten für den angelernten Entscheidungsalgorithmus genutzt werden. Gerade bei großskaligen Bauteilstrukturen kann hierdurch sehr schnell und effizient das gesamte Bauteil untersucht und entsprechende Fehlstellen erkannt und klassifiziert werden.

Gemäß einer Ausführungsform hierzu ist vorgesehen, dass jeder potentielle Fehlerbereich in eine Mehrzahl von einzelnen Zellen (beispielsweise neun Zellen) unterteilt wird, wobei für jede Zelle eines potentiellen Fehlerbereiches die Bildmerkmale ermittelt und die ermittelten Bildmerkmale aller Zellen dann als Eingabedaten für den angelernten Entscheidungsalgorithmus verwendet werden

Die Aufgabe wird im Übrigen auch mit der Erkennungsvorrichtung zum Ermitteln von Fehlstellen von auf einem Werkzeug abgelegtem Fasermaterial eines Faserverbundwerkstoffes gemäß Anspruch 11 gelöst, wobei die Erkennungsvorrichtung aufweist:
- mindestens einen optischen Lichtschnittsensor, bei dem die Fasermaterialoberfläche mit Licht einer Lichtquelle aus einer ersten Richtung beleuchtet und das von der Fasermaterialoberfläche reflektierte Licht aus einer anderen, zweiten Richtung mit einer Kamera aufgenommen wird;
- mindestens eine Thermografiekamera, und
- mindestens eine Polarisationskamera,
- sowie eine Kalibriereinheit und eine Bildauswerteeinheit.

Die Erkennungsvorrichtung ist nun ausgebildet, dass oben beschriebene Verfahren zum Ermitteln von Fehlstellen auszuführen.

Die Aufgabe wird im Übrigen auch mit der Faserlegeanlage zum Ablegen von Fasermaterial eines Faserverbundwerkstoffes gemäß Anspruch 12 erfindungsgemäß gelöst, wobei die Faserlegeanlage eine Erkennungsvorrichtung hat und zur Durchführung des Verfahrens wie vorstehend beschrieben ausgebildet ist.

Gemäß einer Ausführungsform ist vorgesehen, dass die Faserlegeanlage mindestens einen Roboter hat, an dem als Endeffektor ein Faserlegekopf zum kontinuierlichen Ablegen von Fasermaterial vorgesehen ist, wobei der mindestens eine optische Lichtschnittsensor, die mindestens eine Thermografiekamera sowie die mindestens eine Polarisationskamera der Erkennungsvorrichtung an dem Faserlegekopf angeordnet sind.

Die Erfindung wird anhand der beigefügten Figuren beispielhaft näher erläutert. Es zeigen:
- Figur 1: schematische Darstellung einer Faserlegeanlage mit der erfindungsgemäßen Erkennungsvorrichtung;
- Figur 2: schematische Darstellung eines potentiellen Fehlerbereiches.

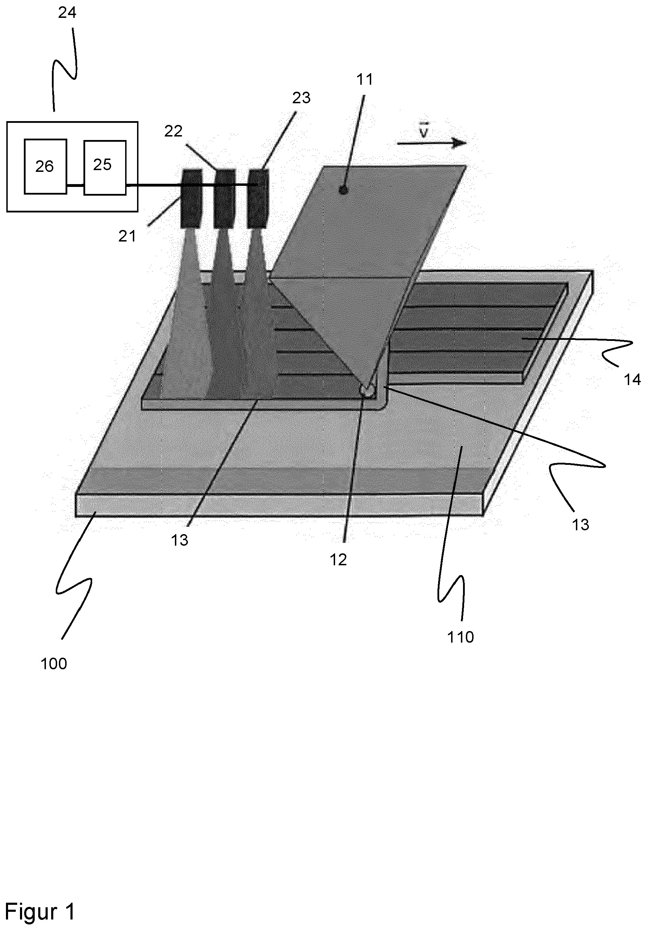

Figur 1 zeigt in einer schematisch stark vereinfachten Darstellung eine Faserlegeanlage 10, die einen an einem nicht dargestellten Roboter angeordneten Faserlegekopf 11 als Endeffektor hat. Der Faserlegekopf 11 weist eine Kompaktierungsrolle 12 auf, um das dem Faserlegekopf 11 zugeführte Fasermaterial 13 auf einer formgebenden Werkzeugoberfläche 110 eines Formwerkzeuges 100 abzulegen.

Die Faserlegeanlage 10 weist des Weiteren die erfindungsgemäße Erkennungsvorrichtung 20 auf, die einen Laserlichtschnittsensor 21, eine Thermografiekamera 22 sowie eine Polarisationskamera 23 hat. Der Laserlichtschnittsensor 21, die Thermografiekamera 22 sowie die Polarisationskamera 23 sind dabei im Nachlauf des Faserlegekopfes 11 an diesem fest angeordnet und werden somit während des Ablegens des Fasermaterials 13 auf der formgebenden Werkzeugoberfläche 110 gegenüber der Fasermaterialoberfläche der bereits abgelegten Fasermaterialien 13 verfahren. Während des Verfahrens der 3 Sensoren 21, 22 und 23 gegenüber der Fasermaterialoberfläche 24 wird dabei die Fasermaterialoberfläche 24 erfasst und entsprechend auf Fehlstellen untersucht.

Hierfür stehen die 3 Sensoren 21, 22 und 23 mit einer Datenverarbeitungseinheit 24 in Verbindung, die so die ersten Bilddaten des Laserlichtschnittsensors 21, die zweiten Bilddaten der Thermografiekamera 22 sowie die dritten Bilddaten der Polarisationskamera 23 erhält.

Die drei Bilddaten werden zunächst mittels einer Kalibriereinheit 25 auf ein gemeinsames Bezugssystem kalibriert, sodass die Bildpunkte in den ersten, zweiten und dritten Bilddaten den jeweiligen Messpunkten auf der Fasermaterialoberfläche entsprechen. Anschließend werden mittels einer Bildauswertung einer Bildauswerteeinheit 26 die kalibrierten und somit fusionierten Bilddaten der drei Sensoren 21, 22 und 23 analysiert, um Fehlstellen auf der Fasermaterialoberfläche 14 bzw. an dem Fasermaterial 13 zu erkennen.

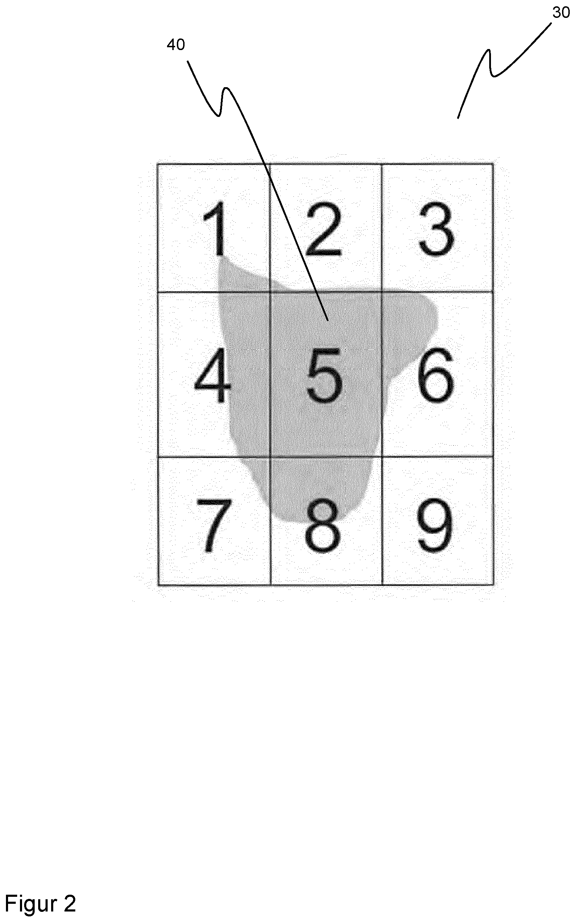

Hierzu wird zunächst eine Vorabanalyse gemacht, um potentielle Fehlerbereiche, wie sie in Figur 2 zu erkennen sind, zu detektieren. Hierfür werden die Sensordaten zunächst mit einer sehr schnellen statistischen Berechnungsmethode analysiert, um die potentiellen Fehlerbereiche zu ermitteln. Dies kann beispielsweise mithilfe des sogenannten "Adaptive Thresholding" geschehen, welches über die Analyse eines Histogramms entsprechend auffällige Bildbereiche gekennzeichnet. Alle nicht markierten Bereiche werden von der weiteren Betrachtung und Bildauswertung ausgeschlossen.

Figur 2 zeigt einen solchen potentiellen Fehlerbereich 30, der durch die Bildauswerteeinheit 26 genau neun Zellen unterteilt wurde. Innerhalb des potentiellen Fehlerbereiches 30 befindet sich eine Fehlstelle 40, die sich in Teilen in die einzelnen Zellen des potentiellen Fehlerbereiches 30 erstreckt.

Für jede dieser Zellen werden nun Bildmerkmale verschiedener Bildmerkmalsarten ermittelt, um so eine Abstraktion der Eingangsdaten (Bilddaten) in spezieller Weise zu ermöglichen. Als Bildmerkmalsarten werden dabei die folgenden Elemente genutzt:
- Histogram of Oriented Gradients (HOG),
- Rotation invariant Histogram of Oriented Gradients (RiHOG),
- ein oder mehrere statistische Momente,
- Local Binary Patterns (LBP).

In einer Ausführungsform werden dabei für jede Zelle neun verschiedene Histogram of Oriented Gradients (HOG) und neun Rotation invariant Histogram of Oriented Gradients (RiHOG) ermittelt. Als statistische Momente werden darüber hinaus für jede Zelle ein Erwartungswert, die Standardabweichung, die schiefe Ebene, eine Wölbung, ein Schwerpunkt in X-Richtung, ein Schwerpunkt in Y-Richtung, eine Orientierung, eine Exzentrität, ein Mittelwert, ein Mittelwert in X Richtung, ein Mittelwert in Y Richtung, eine Varianz, eine Varianz in X-Richtung, eine Varianz in Y-Richtung, die Energie, die Trägheit, die Homogenität, die Kovarianz sowie eine Korrelation ermittelt. Für jede der neun Zellen werden darüber hinaus insgesamt zwölf verschiedene Histogram of Local Binary Patterns (LBP) Werte berechnet, sodass ich pro Zelle und pro Bilddaten insgesamt 49 Bildmerkmale ermitteln lassen.

Die gesamten Bildmerkmale, die für jeden Bilddatensatz und jede Zelle ermittelt wurden, werden dann als Eingangsdaten in ein maschinelles Lernsystem eingespeist, welches dahingehend trainiert ist, basierend auf den Eingangsdaten entsprechende Ausgangsdaten zu generieren, die anzeigen, ob es sich basierend auf den Eingangsdaten um eine Fehlstelle auf der Fasermaterialoberfläche bzw. an dem Fasermaterial handelt oder nicht. Ein solches maschinelles Lernsystem kann dabei beispielsweise eine Support Vector Machine (SVM) sein.

Mit der vorliegenden Erfindung wird es somit möglich, prozesssicher und effizient auch großskaliger Strukturbauteile hinsichtlich von Fehlstellen an dem Fasermaterial bzw. der Fasermaterialoberfläche zu untersuchen, wodurch Prozesszeiten minimiert und die Bauteilqualität erhöht werden kann.

### Bezugszeichenliste

- 10: Faserlegeanlage
- 11: Faserlegekopf
- 12: Kompaktierungsrolle
- 13: Fasermaterial
- 14: Fasermaterialoberfläche
- 20: Erkennungsvorrichtung
- 21: Laserlichtschnittsensor
- 22: Thermografiekamera
- 23: Polarisationskamera
- 24: Datenverarbeitungseinheit
- 25: Kalibriereinheit
- 26: Bildauswerteeinheit
- 30: potentielle Fehlerbereiche
- 40: Fehlstellen

## Patentansprüche

1. Verfahren zum Ermitteln von Fehlstellen (40) von auf einem Werkzeug abgelegtem Fasermaterial (13) eines Faserverbundwerkstoffes, der das Fasermaterial (13) und ein das Fasermaterial (13) einbettendes Matrixmaterial enthält, mittels einer Erkennungsvorrichtung (20), wobei das Verfahren die folgenden Schritte umfasst:
- Aufnehmen von ersten Bilddaten der Fasermaterialoberfläche (14) des abgelegten Fasermaterials (13) mittels mindestens eines optischen Lichtschnittsensors (21), bei dem die Fasermaterialoberfläche (14) mit Licht einer Lichtquelle aus einer ersten Richtung beleuchtet und das von der Fasermaterialoberfläche (14) reflektierte Licht aus einer anderen, zweiten Richtung mit einer Kamera aufgenommen wird;
- Aufnehmen von zweiten Bilddaten der Fasermaterialoberfläche (14) des abgelegten Fasermaterials (13) mittels mindestens einer Thermografiekamera (22);
- Aufnehmen von dritten Bilddaten der Fasermaterialoberfläche (14) des abgelegten Fasermaterials (13) mittels mindestens einer Polarisationskamera (23);
- Kalibrieren der Bilddaten mittels einer Kalibriereinheit (25) auf ein gemeinsames Bezugssystem derart, sodass die Bildpunkte in den ersten, zweiten und dritten Bilddaten den jeweiligen Messpunkten auf der Fasermaterialoberfläche (14) entsprechen;
- Ermitteln von Fehlstellen (40) der abgelegten Fasermaterialien (13) mittels einer Bildauswerteeinheit (26) durch eine Bildauswertung der ersten, zweiten und dritten Bilddaten.

2. Verfahren nach Anspruch 1, **dadurch gekennzeichnet, dass** aus den ersten Bilddaten ein Höhenprofil der Fasermaterialoberfläche (14) erzeugt wird, das dann der Ermittlung von Fehlstellen (40) als erste Bilddaten zugrunde gelegt wird.

3. Verfahren nach Anspruch 1 oder 2, **dadurch gekennzeichnet, dass** mittels der Bildauswerteeinheit (26) potentielle Fehlerbereiche (30) in den Bilddaten in Abhängigkeit von einer statistischen Bildauswertung der ersten, zweiten und/oder dritten Bilddaten ermittelt werden, bei denen mit einer gewissen Wahrscheinlichkeit anzunehmen ist, dass sie jeweils wenigstens eine Fehlstelle (40) enthalten.

4. Verfahren nach Anspruch 3, **dadurch gekennzeichnet, dass** für die Ermittlung von potentiellen Fehlerbereichen (30) ausschließlich die ersten Bilddaten herangezogen werden.

5. Verfahren nach einem der vorhergehenden Ansprüche, **dadurch gekennzeichnet, dass** für die ersten Bilddaten, die zweiten Bilddaten und die dritten Bilddaten jeweils eine Mehrzahl von Bildmerkmalen einer oder mehrerer Bildmerkmalsarten mittels der Bildauswerteeinheit (26) ermittelt wird, wobei in Abhängigkeit von den ermittelten Bildmerkmalen der ersten Bilddaten, der ermittelten Bildmerkmale der zweiten Bilddaten und der ermittelten Bildmerkmale der dritten Bilddaten dann Fehlstellen (40) der abgelegten Fasermaterialien (13) ermittelt werden.

6. Verfahren nach Anspruch 5, **dadurch gekennzeichnet, dass** ein trainiertes maschinelles Lernsystem bereitgestellt wird, das mittels mindestens eines maschinell angelernten Entscheidungsalgorithmus eine Korrelation zwischen einer Vielzahl von Bildmerkmalen als Eingabedaten und Fehlstellen (40) an dem Fasermaterial (13) als Ausgabedaten enthält, wobei mindestens eine Fehlstelle (40) an dem Fasermaterial (13) mittels des bereitgestellten maschinellen Lernsystems ermittelt wird, indem basierend auf dem angelernten Entscheidungsalgorithmus aus den ermittelten Bildmerkmalen als Eingabedaten des maschinellen Lernsystems mindestens eine Fehlstelle (40) an dem Fasermaterial (13) als Ausgabedaten des maschinellen Lernsystems generiert wird.

7. Verfahren nach Anspruch 6, **dadurch gekennzeichnet, dass** als maschinell angelernter Entscheidungsalgorithmus des maschinellen Lernsystems eine Support Vector Machine (SVM) oder ein künstliches neuronales Netz (KNN) bereitgestellt wird.

8. Verfahren nach einem der Ansprüche 5 bis 7, **dadurch gekennzeichnet, dass** Bildmerkmale für ein oder mehrere der folgenden Bildmerkmalsarten ermittelt werden:
- Histogram of Oriented Gradients (HOG),
- Rotation invariant Histogram of Oriented Gradients (RiHOG),
- ein oder mehrere statistische Momente,
- Local Binary Patterns (LBP).

9. Verfahren nach einem der Ansprüche 5 bis 8, **dadurch gekennzeichnet, dass** ein oder mehrere potentielle Fehlerbereiche (30) ermittelt werden, wobei die Bildmerkmale für jeden ermittelten potentiellen Fehlerbereich (30) ermittelt und als Eingabedaten für den angelernten Entscheidungsalgorithmus verwendet werden.

10. Verfahren nach Anspruch 9, **dadurch gekennzeichnet, dass** jeder potentielle Fehlerbereich (30) in eine Mehrzahl von Zellen unterteilt wird, wobei für jede Zelle eines potentiellen Fehlerbereiches (30) die Bildmerkmale ermittelt und die ermittelten Bildmerkmale aller Zellen dann als Eingabedaten für den angelernten Entscheidungsalgorithmus verwendet werden.

11. Erkennungsvorrichtung (20) zum Ermitteln von Fehlstellen (40) von auf einem Werkzeug abgelegtem Fasermaterial (13) eines Faserverbundwerkstoffes, der das Fasermaterial (13) und ein das Fasermaterial (13) einbettendes Matrixmaterial enthält, wobei die Erkennungsvorrichtung (20) aufweist:
- mindestens einen optischen Lichtschnittsensor (21), bei dem die Fasermaterialoberfläche (14) mit Licht einer Lichtquelle aus einer ersten Richtung beleuchtet und das von der Fasermaterialoberfläche (14) reflektierte Licht aus einer anderen, zweiten Richtung mit einer Kamera aufgenommen wird;
- mindestens eine Thermografiekamera (22), und
- mindestens eine Polarisationskamera (23),
- sowie eine Kalibriereinheit (25) und eine Bildauswerteeinheit (26),
wobei die Erkennungsvorrichtung (20) zur Durchführung des Verfahrens nach einem der vorhergehenden Ansprüche ausgebildet ist.

12. Faserlegeanlage (10) zum Ablegen von Fasermaterial (13) eines Faserverbundwerkstoffes, der ein Fasermaterial (13) und ein das Fasermaterial (13) einbettendes Matrixmaterial aufweist, auf ein Werkzeug zur Herstellung eines Faserverbundbauteils, **dadurch gekennzeichnet, dass** die Faserlegeanlage (10) eine Erkennungsvorrichtung (20) nach Anspruch 11 hat und zur Durchführung des Verfahrens nach einem der Ansprüche 1 bis 10 ausgebildet ist.

13. Faserlegeanlage (10) nach Anspruch 12, **dadurch gekennzeichnet, dass** die Faserlegeanlage (10) mindestens einen Roboter hat, an dem als Endeffektor ein Faserlegekopf (11) zum kontinuierlichen Ablegen von Fasermaterial (13) vorgesehen ist, wobei der mindestens eine optische Lichtschnittsensor (21), die mindestens eine Thermografiekamera (22) sowie die mindestens eine Polarisationskamera (23) der Erkennungsvorrichtung (20) an dem Faserlegekopf (11) angeordnet sind.

## Claims

1. A method of detecting defects (40) of fiber material (13) of a fiber composite material deposited on a tool and containing the fiber material (13) and a matrix material embedding the fiber material (13) by means of a detection device (20), the method comprising the following steps:
- Recording of first image data of the fiber material surface (14) of the deposited fiber material (13) by means of at least one optical light section sensor (21), in which the fiber material surface (14) is illuminated with light from a light source from a first direction and the light reflected by the fiber material surface (14) from another, second direction is recorded with a camera;
- Recording second image data of the fiber material surface (14) of the deposited fiber material (13) by means of at least one thermographic camera (22);
- Recording third image data of the fiber material surface (14) of the deposited fiber material (13) by means of at least one polarization camera (23);
- Calibrating the image data by means of a calibration unit (25) to a common reference system in such a way that the image points in the first, second and third image data correspond to the respective measuring points on the fiber material surface (14);
- Determination of defects (40) of the deposited fiber materials (13) by means of an image evaluation unit (26) by means of an image evaluation of the first, second and third image data.

2. Method according to claim 1, **characterized in that** a height profile of the fiber material surface (14) is generated from the first image data, which is then used as the basis for determining imperfections (40) as the first image data.

3. Method according to claim 1 or 2, **characterized in that** potential defect areas (30) in the image data are determined by means of the image evaluation unit (26) as a function of a statistical image evaluation of the first, second and/or third image data, in which it can be assumed with a certain probability that they each contain at least one defect (40).

4. Method according to claim 3, **characterized in that** only the first image data is used to determine potential defect areas (30).

5. Method according to one of the preceding claims, **characterized in that** for the first image data, the second image data and the third image data, in each case a plurality of image features of one or more image feature types is determined by means of the image evaluation unit (26), wherein defects (40) of the deposited fiber materials (13) are then determined as a function of the determined image features of the first image data, the determined image features of the second image data and the determined image features of the third image data.

6. Method according to claim 5, **characterized in that** a trained machine learning system is provided which contains a correlation between a plurality of image features as input data and defects (40) on the fiber material (13) as output data by means of at least one machine-learned decision algorithm, wherein at least one defect (40) on the fiber material (13) is determined by means of the provided machine learning system by generating at least one defect (40) on the fiber material (13) as output data of the machine learning system from the determined image features as input data of the machine learning system based on the trained decision algorithm.

7. Method according to claim 6, **characterized in that** a support vector machine (SVM) or an artificial neural network (ANN) is provided as the machine-learned decision algorithm of the machine learning system.

8. The method according to any one of claims 5 to 7, **characterized in that** image features are determined for one or more of the following image feature types:
- Histogram of Oriented Gradients (HOG),
- Rotation invariant Histogram of Oriented Gradients (RiHOG),
- one or more statistical moments,
- Local Binary Patterns (LBP).

9. The method according to any one of claims 5 to 8, **characterized in that** one or more potential error areas (30) are determined, wherein the image features for each determined potential defect area (30) are determined and used as input data for the learned decision algorithm.

10. The method according to claim 9, **characterized in that** each potential defect area (30) is divided into a plurality of cells, wherein the image features are determined for each cell of a potential defect area (30) and the determined image features of all cells are then used as input data for the learned decision algorithm.

11. A detection device (20) for detecting defects (40) of fiber material (13) of a fiber composite material deposited on a tool, the fiber composite material comprising the fiber material (13) and a matrix material embedding the fiber material (13), wherein the detection device (20) comprises:
- at least one optical light section sensor (21), in which the fiber material surface (14) is illuminated with light from a light source from a first direction and the light reflected by the fiber material surface (14) from another, second direction is recorded with a camera;
- at least one thermographic camera (22), and
- at least one polarization camera (23),
- as well as a calibration unit (25) and an image evaluation unit (26),
wherein the recognition device (20) is designed to carry out the method according to one of the preceding claims.

12. Fiber laying system (10) for depositing fiber material (13) of a fiber composite material, which comprises a fiber material (13) and a matrix material embedding the fiber material (13), on a tool for producing a fiber composite component, **characterized in that** the fiber laying system (10) has a recognition device (20) according to claim 11 and is designed to carry out the method according to one of claims 1 to 10.

13. Fiber laying system (10) according to claim 12, **characterized in that** the fiber laying system (10) has at least one robot on which a fiber laying head (11) for continuously laying fiber material (13) is provided as an end effector, the at least one optical light section sensor (21), the at least one thermographic camera (22) and the at least one polarization camera (23) of the detection device (20) being arranged on the fiber laying head (11).

## Revendications

1. Procédé de détermination de défauts (40) d'un matériau fibreux (13), déposé sur un outil, d'un matériau composite à fibres qui contient le matériau fibreux (13) et un matériau de matrice enrobant le matériau fibreux (13), au moyen d'un dispositif de détermination (20), le procédé comprenant les étapes suivantes consistant à :
- enregistrer des premières données d'image de la surface de matériau fibreux (14) du matériau fibreux déposé (13) au moyen d'au moins un capteur à coupe optique (21) dans lequel la surface de matériau fibreux (14) est éclairée par la lumière d'une source lumineuse depuis une première direction et la lumière réfléchie par la surface de matériau fibreux (14) est enregistrée depuis une autre direction, à savoir une deuxième direction, au moyen d'une caméra ;
- enregistrer des deuxièmes données d'image de la surface de matériau fibreux (14) du matériau fibreux déposé (13) au moyen d'au moins une caméra thermographique (22) ;
- enregistrer des troisièmes données d'image de la surface de matériau fibreux (14) du matériau fibreux déposé (13) au moyen d'au moins une caméra de polarisation (23) ;
- calibrer les données d'image au moyen d'une unité de calibrage (25) sur un système de référence commun de telle sorte que les points d'image dans les premières, deuxièmes et troisièmes données d'image correspondent aux points de mesure respectifs sur la surface de matériau fibreux (14) ;
- déterminer des défauts (40) des matériaux fibreux déposés (13) au moyen d'une unité d'évaluation d'image (26) par une évaluation d'image des premières, deuxièmes et troisièmes données d'image.

2. Procédé selon la revendication 1,
**caractérisé en ce qu'**un profil de hauteur de la surface de matériau fibreux (14) est généré à partir des premières données d'image, lequel est ensuite utilisé comme premières données d'image pour la détermination des défauts (40).

3. Procédé selon la revendication 1 ou 2,
**caractérisé en ce qu'**au moyen de l'unité d'évaluation d'image (26), des zones de défaut potentielles (30) sont déterminées dans les données d'image en fonction d'une évaluation d'image statistique des premières, deuxièmes et/ou troisièmes données d'image, pour lesquelles on peut supposer avec une certaine probabilité qu'elles contiennent chacune au moins un défaut (40).

4. Procédé selon la revendication 3,
**caractérisé en ce que** seules les premières données d'image sont utilisées pour déterminer des zones de défaut potentielles (30).

5. Procédé selon l'une des revendications précédentes,
**caractérisé en ce que**, pour les premières données d'image, les deuxièmes données d'image et les troisièmes données d'image, une pluralité de caractéristiques d'image d'un ou plusieurs types de caractéristiques d'image est respectivement déterminée au moyen de l'unité d'évaluation d'image (26), des défauts (40) des matériaux fibreux déposés (13) étant alors déterminés en fonction des caractéristiques d'image déterminées des premières données d'image, des caractéristiques d'image déterminées des deuxièmes données d'image et des caractéristiques d'image déterminées des troisièmes données d'image.

6. Procédé selon la revendication 5,
**caractérisé en ce qu'**un système d'apprentissage automatique entraîné est mis à disposition, lequel assure, au moyen d'au moins un algorithme de décision appris automatiquement, une corrélation entre une pluralité de caractéristiques d'image comme données d'entrée et des défauts (40) sur le matériau fibreux (13) comme données de sortie, dans lequel au moins un défaut (40) sur le matériau fibreux (13) est déterminé au moyen du système d'apprentissage automatique mis à disposition, en générant, sur la base de l'algorithme de décision appris, au moins un défaut (40) sur le matériau fibreux (13) comme données de sortie du système d'apprentissage automatique à partir des caractéristiques d'image déterminées comme données d'entrée du système d'apprentissage automatique.

7. Procédé selon la revendication 6,
**caractérisé en ce qu'**une machine vectorielle de support (SVM) ou un réseau neuronal artificiel (KNN) est mis à disposition comme algorithme de décision appris automatiquement du système d'apprentissage automatique.

8. Procédé selon l'une des revendications 5 à 7,
**caractérisé en ce que** des caractéristiques d'image sont déterminées pour un ou plusieurs des types de caractéristiques d'image suivants :
- histogramme des gradients orientés (HOG),
- histogramme invariant de rotation des gradients orientés (RiHOG),
- un ou plusieurs moments statistiques,
- motifs binaires locaux (Local Binary Patterns - LBP).

9. Procédé selon l'une des revendications 5 à 8,
**caractérisé en ce qu'**une ou plusieurs zones de défaut potentielles (30) sont déterminées, les caractéristiques d'image étant déterminées pour chaque zone de défaut potentielle déterminée (30) et utilisées comme données d'entrée pour l'algorithme de décision appris.

10. Procédé selon la revendication 9,
**caractérisé en ce que** chaque zone de défaut potentielle (30) est divisée en une pluralité de cellules, les caractéristiques d'image étant déterminées pour chaque cellule d'une zone de défaut potentielle (30), et les caractéristiques d'image déterminées de toutes les cellules étant ensuite utilisées comme données d'entrée pour l'algorithme de décision appris.

11. Dispositif de détection (20) pour déterminer des défauts (40) d'un matériau fibreux (13), déposé sur un outil, d'un matériau composite à fibres qui contient le matériau fibreux (13) et un matériau de matrice enrobant le matériau fibreux (13), le dispositif de détection (20) comprenant :
- au moins un capteur à coupe optique (21) dans lequel la surface de matériau fibreux (14) est éclairée par la lumière d'une source lumineuse depuis une première direction et la lumière réfléchie par la surface de matériau fibreux (14) est enregistrée depuis une autre direction, à savoir une deuxième direction, au moyen d'une caméra ;
- au moins une caméra thermographique (22), et
- au moins une caméra de polarisation (23),
- ainsi qu'une unité de calibrage (25) et une unité d'évaluation d'image (26),
le dispositif de détection (20) étant conçu pour mettre en œuvre le procédé selon l'une des revendications précédentes.

12. Installation de pose de fibres (10) pour déposer un matériau fibreux (13) d'un matériau composite à fibres, contenant un matériau fibreux (13) et un matériau de matrice enrobant le matériau fibreux (13), sur un outil de fabrication d'un composant de matériau composite à fibres,
**caractérisée en ce que** l'installation de pose de fibres (10) comprend un dispositif de détection (20) selon la revendication 11 et est conçue pour mettre en œuvre le procédé selon l'une des revendications 1 à 10.

13. Installation de pose de fibres (10) selon la revendication 12,
**caractérisée en ce que** l'installation de pose de fibres (10) comprend au moins un robot sur lequel est prévue, en tant qu'effecteur terminal, une tête de pose de fibres (11) pour déposer en continu un matériau fibreux (13), ledit au moins un capteur à coupe optique (21), ladite au moins une caméra thermographique (22) ainsi que ladite au moins une caméra de polarisation (23) du dispositif de détection (20) étant disposés sur la tête de pose de fibres (11).
